# EUROPÄISCHE PATENTSCHRIFT

(11) **EP 2 147 778 B1**
(45) Veröffentlichungstag und Bekanntmachung des Hinweises auf die Patenterteilung: **16.03.2011**
(21) Anmeldenummer: 09157071.3
(22) Anmeldetag: 01.04.2009
(51) Int. Cl.: B29D 24/00, B32B 3/12

(54) **Leichtbauplatte für den Möbelbau**
Light construction board for furniture construction
Plaque de construction légère pour la construction de meubles

(30) Priorität: 25.07.2008 DE 102008035012
(43) Veröffentlichungstag der Anmeldung: 27.01.2010
(73) Patentinhaber: Fritz Egger GmbH & Co. OG, 3105 Unterradlberg (AT)
(72) Erfinder: Berktold, Albert, 6380, St. Johann/Tirol (AT)
(74) Vertreter: Cohausz & Florack

(56) Entgegenhaltungen:
- WO-A-98/29240

## Beschreibung

Die Erfindung betrifft eine Leichtbauplatte für den Möbelbau mit einer Mittellage und zwei Decklagen, wobei die Mittellage zumindest zwei Lagen mit quer zur Plattenebene verlaufenden Stegen aufweist, wobei zwischen den zumindest zwei Lagen mit den quer zur Plattenebene verlaufenden Stegen zumindest eine Stützlage angeordnet ist, und wobei die zumindest eine Stützlage in Richtung der Plattenebene eine größere Formstabilität aufweist als jede der zumindest zwei Lagen mit den quer zur Plattenebene verlaufenden Stegen. Die Erfindung betrifft ferner ein entsprechendes Verfahren zur Herstellung einer Leichtbauplatte. Eine solche Leichtbauplatte und ein solches Verfahren sind aus der WO 98/29240 A1 bekannt.

Leichtbauplatten (LBPL) sind aus dem Stand der Technik hinlänglich bekannt. Auch im Möbel- und Innenausbau werden diese seit langer Zeit in vielfältiger Weise verwendet. Haupteinsatzgebiet war und ist hier speziell der Türenbau. So ist es vor allem bei Zimmertüren, die also geringen Anforderungen hinsichtlich des Wärme- und Schallschutzes unterliegen, üblich ein Rahmenelement mit einem Wabenkern beidseitig zu beplanken und dieses dann mit den entsprechenden Bohrungen, Fräsungen, etc. zu einem Türelement weiterzuverarbeiten.

Im gehobenen Einrichtungsbereich wurden ebenfalls Leichbauplatten im Möbelbau eingesetzt, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, sodass auch ein Einsatz auf breiterem Gebiet wirtschaftlich möglich wird. Damit sind einer breiteren Schicht von Endverbrauchern die verschiedenen Vorzüge der Leichtbauplatten zugängig.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element auch erst durch abschließendes Lackieren seine endgültige Oberfläche erhalten kann.

Heute werden Leichtbauplatten in zunehmendem Maß auch industriell gefertigt. Dazu wird eine leichte Mittellage mit Deckplatten versehen, zumeist durch Klebung, so dass ein großformatiger, rahmenloser Verbund entsteht. Je nach geforderter Stabilität der Platte werden unterschiedlich dicke Deckplatten, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall wie Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Die so hergestellten Platten werden dann in die gewünschte Größe aufgeteilt. Je nach vorgesehenem Einsatz der erhaltenen Elemente werden diese dann mit einer Abdeckung im Bereich der Schmalfläche versehen oder ein zumindest teilweise umlaufender Rahmen wird nachträglich eingebracht. Dies geschieht durch Ausfräsen des Kantenbereichs und nachfolgendes Einkleben eines Rahmenprofils, das wiederum zumeist aus einem Holzwerkstoff besteht. Durch eine entsprechende Profilierung der Kantenausfräsung ist es dabei auch möglich eine Kraft-und/oder formschlüssige Fixierung zu erreichen. Letzteres wird erreicht, indem ein komplementär geformtes Profil durch elastische Verformung der verbliebenen Deckplattenschicht formschlüssig gehalten wird. In vorteilhafter Weise können Kraft- und/oder Formschluss und eine Klebeverbindung kombiniert werden. Auf das Rahmenprofil kann dann im Bedarfsfall noch eine Schmalflächenabdeckung, die auch die Stirnkanten der beiden Decklagen abdeckt, beispielsweise aus Kunststoff aufgebracht werden.

Das in die Kantenausfräsung eingesetzte Rahmenprofil kann auch, wie beispielsweise aus der EP 1 562 970 A1 oder DE 20 2006 003 857 U1 bekannt, zweiteilig ausgebildet sein und eine in die Ausfräsung eingesetzte, nämlich eine an den beiden Decklagen befestigte Stützleiste mit einer daran fixierten Abdeckung aufweisen, die die gesamte Schmalfläche der Leichtbauplatte, also die Mittellage sowie die Stirnkanten der beiden Decklagen, abdeckt.

Gemäß der DE 10 2004 022 018 B3 kann anstelle einer Stützleiste zur Befestigung der sich über die Schmalfläche erstreckenden Abdeckung auch ein expandierender, aushärtender Klebstoff vorgesehen werden, der im nicht-expandierten Zustand in der Ausfräsung an den Innenseiten der Decklagen appliziert wird und sich anschließend durch die Expansion mit der zwischenzeitlich an der Schmalfläche angesetzten Abdeckung verbindet.

Aus der DE 10 2005 023 065 A1 ist es ferner bekannt, ein Rahmenprofil in einer Ausnehmung am Rand einer Leichtbauplatte zwischen den beiden Decklagen durch eine aushärtende vergussmasse zu bilden. Ein solchermaßen geformtes Rahmenprofil kann dann genau wie ein Rahmenprofil aus einem Holzwerkstoff mit einer entsprechenden Kantenkontur versehen werden, auf der dann die Abdeckung dem Kantenprofil folgend aufgeklebt wird.

Problematisch beim Stand der Technik ist allerdings, dass bei Leichtbauplatten das Anbringen einer Abdeckung im Bereich der Schmalfläche aufgrund der vorzusehenden Ausfräsung und Einbringung eines Rahmenprofils relativ aufwendig ist.

Die WO 98/29240 A1 offenbart eine Leichtbauplatte mit einer Mittellage und zwei Decklagen, wobei die Mittellage zumindest zwei Lagen mit quer zur Plattenebene verlaufenden Stegen aufweist. Zwischen den zumindest zwei Lagen mit den quer zur Plattenebene verlaufenden Stegen ist eine Stützlage angeordnet, die in Richtung der Plattenebene eine größere Formstabilität aufweist als jede der zumindest zwei Lagen mit den quer zur Plattenebene verlaufenden Stegen. Nachteilig bei dem genannten Stand der Technik ist jedoch, dass die beschriebene Art und Weise des Verschließens der Schmalfläche der Leichtbauplatte nicht für eine Leichtbauplatte in Freiform geeignet ist, bei der also die Plattenkontur entlang der Längserstreckung der Platte Krümmungen aufweist, da die verwendete Abdeckung einen relativ großen Querschnitt hat und daher nicht ohne weiteres an beliebige Krümmungsradien entlang der Plattenlängserstreckung angepasst werden kann. Zumindest besteht das Risiko, dass die Abdeckung, wenn sie zu stark gebogen wird, beschädigt wird.

Es ist daher die Aufgabe der vorliegenden Erfindung, eine Leichtbauplatte bereitzustellen, bei der auch individuell gestaltete Schmalflächen in einfacher Weise mit einer Abdeckung versehen werden können.

Die zuvor hergeleitete und aufgezeigte Aufgabe wird gemäß einer ersten Lehre der vorliegenden Erfindung bei einer Leichtbauplatte der eingangs genannten Art dadurch gelöst, dass an einer Schmalfläche der Leichtbauplatte eine Stirnseite zumindest einer Stützlage gegenüber einer Stirnseite zumindest einer Decklage in Richtung der Plattenebene nach außen hin versetzt ist, so dass die Schmalfläche eine konvexe Kantenkontur aufweist. Dies ermöglicht ein sicheres Abdecken individueller Kantenkonturen der Schmalfläche der Leichtbauplatte.

Durch mindestens eine Zweiteilung der Mittellage und die Anordnung einer Stützlage, die ebenfalls mehrlagig aufgebaut sein kann, zwischen den zumindest zwei Lagen der Mittellage wird erreicht, dass eine Abdeckung, die an der Schmalfläche vorgesehen wird, im Bereich der Mittellage abgestützt wird, ohne dass dazu eine Ausnehmung in den Kantenbereich eingefräst und ein separates Rahmenprofil eingesetzt werden muss. Indem die Stützlage durchgängig zusammen mit der Mittellage in den Schichtaufbau der Leichtbauplatte eingebracht wird, ist auch gewährleistet, dass beim Ablängen der Leichtbauplatte auf das gewünschte Maß und Erzeugen der Plattenkontur immer auch eine Unterstützung für die besagte Abdeckung vorhanden ist. Auch bei einer vor dem Aufbringen der Abdeckung durchgeführten Kantenbearbeitung, bei der Material entfernt wird, ist immer ausreichend Material zum Stützen der Abdeckung vorhanden; es muss also nicht beim Entfernen von Material im Bereich der Kante auf eine ausreichende Dicke an Stützmaterial geachtet werden, wie es beispielsweise im Stand der Technik der Fall wäre, wenn eine Kantenbearbeitung bei einem eingesetzten Rahmenprofil durchgeführt wird. Schließlich führt die im Vergleich zur Mittellage größere Formstabilität der Stützlage in Richtung der Plattenebene auch zu einer größeren Stabilität in Plattenlängsrichtung, wodurch auch entsprechend höhere Lasten von der Leichtbauplatte in dieser Richtung aufgenommen werden können.

Gemäß einer Ausgestaltung der erfindungsgemäßen Leichtbauplatte weist zumindest eine der Lagen mit den quer zur Plattenebene verlaufenden Stegen eine Lage aus einer Zellulosematerial enthaltenden Wabenstruktur auf. Besonders bevorzugt ist hier eine Papier- oder Pappwabenstruktur, da diese eine relativ hohe Formstabilität quer zur Plattenebene mit einem relativ geringen Gewicht der Mittellage verbindet.

Gemäß einer weiteren Ausgestaltung weist die zumindest eine Stützlage zumindest eine Lage ohne Durchbrechungen auf. Mit anderen Worten kann die Stützlage mehrere Lagen aufweisen, von denen zumindest eine, vorzugsweise alle, zum Erreichen einer größtmöglichen Formstabilität in Richtung der Plattenebene keine Durchbrechungen, beispielsweise Bohrungen, Ausstanzungen oder anderen Ausnehmungen, aufweist. Solche Durchbrechungen können beispielsweise dann nötig sein, wenn Beschläge oder dergleichen in der Leichtbauplatte verankert werden müssen. Mit Durchbrechungen sind im Sinne der Erfindung nicht die Stoßstellen zwischen zwei in Richtung der Plattenebene nebeneinander angeordneten Stützlagenabschnitten gemeint, die beispielsweise zwangsläufig dann vorhanden sind, wenn die Stützlage aus in Richtung der Plattenebene nebeneinander angeordneten Einzelplatten hergestellt wird. Neben einer Herstellung aus Einzelplatten ist aber auch die Herstellung durch Einbringen eines Endlosbandes als Stützlage, das beispielsweise auf einer Rolle bevorratet ist, denkbar.

Die zumindest eine Stützlage weist gemäß noch einer weiteren Ausgestaltung der erfindungsgemäßen Leichtbauplatte zumindest eine Lage aus einem Holzwerkstoff auf. Eine besonders große Formstabilität in Richtung der Plattenebene, also in Plattenlängsrichtung, wird insbesondere dann erreicht, wenn als Holzwerkstoff eine Spanplatte, eine Faserplatte, vorzugsweise Hartfaserplatte, oder eine OSB-Platte (Oriented Strand Board-Platte) vorgesehen wird. Sind bei der zumindest einen Stützlage mindestens zwei Lagen vorgesehen, so können auch beide Lagen aus einem Holzwerkstoff bestehen, wobei dann zumindest eine der Lagen, vorzugsweise alle Lagen, insbesondere aus einer Spanplatte, aus einer Faserplatte, vorzugsweise Hartfaserplatte, oder aus einer OSB-Platte gebildet werden. Vorzugsweise sind die Lagen, die die Stützlage bilden, durch Verklebung miteinander verbunden.

Alternativ oder zusätzlich weist gemäß wiederum einer weiteren Ausgestaltung der erfindungsgemäßen Leichtbauplatte zumindest eine der Decklagen mindestens eine Lage aus einem Holzwerkstoff auf. Auch hier kann aus Stabilitätsgründen als Holzwerkstoff eine Spanplatte, eine Faserplatte, vorzugsweise Hartfaserplatte, oder eine OSB-Platte vorgesehen sein.

Durch Verwendung einer oder mehrerer Stützlagen im Plattenaufbau zwischen den einzelnen Lagen der Mittellage kann die Leichtbauplatte eine gesamte Dicke von mindestens 40 mm, insbesondere mindestens 60 mm, vorzugsweise mindestens 100 mm, aufweisen, ohne dabei auf eine Abdeckung im Bereich der Schmalfläche verzichten zu müssen. So unterstützen die Stützlagen die Abdeckung in Richtung der Plattenebene automatisch an Stellen, an denen gemäß Stand der Technik entweder keine Unterstützung oder ein aufwendiges Rahmenprofil vorgesehen wäre. Die erfindungsgemäß vorgesehene Stützlage bzw. das Vorsehen mehrerer Stützlagen, insbesondere in regelmäßigen Abständen über die Dicke der Leichtbauplatte, erlaubt, dass zumindest eine Schmalfläche der Leichtbauplatte, vorzugsweise sämtliche Schmalflächen, mit einer Abdeckung versehen ist, die sich vorzugsweise über die gesamte Dicke der Leichtbauplatte erstreckt.

Das Vorsehen einer oder mehrerer Stützlagen hat auch den Vorteil, dass die Abdeckung relativ dünn ausgeführt werden kann, da diese über die Dicke der Leichtbauplatte an einer oder mehreren Stellen abgestützt wird. Ohne eine solche Stützlage müsste die Abdeckung, wenn kein aufwendiges Rahmenprofil vorgesehen werden soll, wesentlich dicker ausgeführt werden, um die nötige Stabilität und Festigkeit, insbesondere Resistenz gegenüber Stößen im Kantenbereich, zu gewährleisten. So kann die Abdeckung erfindungsgemäß eine Dicke von höchstens 1/10, insbesondere höchstens 1/20, vorzugsweise 1/40, der Dicke der Leichtbauplatte aufweisen.

Aus Stabilitätsgründen und zur Gewährleistung einer hohen Stoßfestigkeit weist die Abdeckung, insbesondere wenn sie die gesamte Schmalfläche abdeckt, zumindest eine Lage aus einem Kunststoff oder eine Lage aus einem Furnier oder einem Schichtstoff oder einem dünnen Holzwerkstoff auf. Im Falle der Verwendung einer Lage aus Kunststoff hat sich als vorteilhaft erwiesen, wenn diese PVC (Polyvinylclorid), ABS (AcrylnitrilButadien-Styrol), PET (Polyethylenterephthalat), Polyolefine, vorzugsweise PP (Polypropylen), härtbare Harze, vorzugsweise Melaminharz, und/oder Acryl, vorzugsweise PMMA (Polymethylmethacrylat) aufweist. Im Falle der Verwendung eines dünnen Holzwerkstoffs als zumindest eine Lage der Abdeckung kann eine Dünnspanplatte oder eine dünne Faserplatte, vorzugsweise Hartfaserplatte, verwendet werden. Gemäß einer weiteren Ausgestaltung der erfindungsgemäßen Leichtbauplatte weist diese eine Beschichtung mit zumindest einer Lage aus einem Kunststoff oder einer Lage aus einem Furnier oder einem Schichtstoff oder einem dünnen Holzwerkstoff auf. Auch in diesem Fall enthält die Kunststofflage insbesondere PVC, ABS, PET, Polyolefine, vorzugsweise PP, aushärtbare Harze, vorzugsweise Melaminharz, und/oder Acryl, vorzugsweise PMMA. Als dünner Holzwerkstoff kann auch hier eine Dünnspanplatte oder eine dünne Faserplatte, vorzugsweise Hartfaserplatte, vorgesehen werden. Dabei bildet zumindest der der Leichtbauplatte abgewandte Teil der Beschichtung zumindest teilweise auch den der Leichtbauplatte abgewandten Teil der Abdeckung. Mit anderen Worten gehen Beschichtung und Abdeckung ineinander über.

Das Vorsehen einer oder mehrerer Stützlagen ermöglicht auch ein sicheres Abdecken individueller Kantenkonturen der Schmalfläche der Leichtbauplatte. Vorzugsweise folgt dabei die Kontur der der Leichtbauplatte abgewandten Fläche der Abdeckung, also die Außenkontur der Abdeckung, der Kantenkontur der Schmalfläche. Auf diese Weise können eine Vielzahl unterschiedlicher Verläufe von Kantenkonturen der Schmalfläche vorgesehen und auf einfache Weise abgedeckt werden.

Die Dicke zumindest einer der Decklagen beträgt gemäß noch einer weiteren Ausgestaltung höchstens 3 mm, insbesondere höchstens 2,7 mm, vorzugsweise höchstens 2,4 mm. So kann aufgrund des Vorhandenseins einer Stützlage innerhalb der Mittellage die Befestigung der Abdeckung im Bereich der Schmalfläche zumindest teilweise auch von der Stirnkante der Stützlage übernommen werden. Bei den Decklagen ist damit eine große Stirnkante als Verbindungsfläche nicht mehr zwingend erforderlich. Die Leichtbauplatte kann damit insgesamt noch leichter und gleichzeitig wirtschaftlicher ausgeführt werden.

Bei der erfindungsgemäßen Leichtbauplatte kann neben der bereits zuvor beschriebenen individuellen Kantenkontur der Schmalfläche auch eine individuelle Plattenkontur - dies ist die Kontur quer zur Kantenkontur der Schmalfläche - realisiert werden, da im Bereich der Schmalfläche zur Verstärkung und Abstützung kein Rahmenprofil mehr notwendig ist, das aufgrund seiner naturgemäß nahezu nicht vorhandenen Flexibilität keine beliebig kleinen Krümmungsradien bei der Plattenkontur zugelassen hat. Bisher war der Krümmungsradius immer von der Verformbarkeit des Rahmenprofils abhängig. Auch musste das Rahmenprofil, um Krümmungsradien zu realisieren, eine gewissen Mindestdicke in Richtung der Plattenebene aufweisen, da zum Erstellen der Plattenkontur insbesondere bei kleinen Krümmungsradien relativ viel Material entfernt werden musste. Erfindungsgemäß kann dagegen der Schichtaufbau aus Decklagen, Mittellage und Stützlage individuell zugeschnitten werden, ohne auf Mindestradien achten zu müssen. So kann die Plattenkontur der Leichtbauplatte zumindest abschnittsweise einen Krümmungsradius von höchstens 30 mm, insbesondere höchstens 20 mm, vorzugsweise höchstens 10 mm, aufweisen und dennoch auf einfache Weise durch bloßes Aufbringen der Abdeckung im Bereich der Schmalseite abgedeckt werden.

Die zuvor hergeleitete und aufgezeigte Aufgabe wird ferner gemäß einer zweiten Lehre der vorliegenden Erfindung gelöst durch ein Verfahren zur Herstellung einer Leichtbauplatte für den Möbelbau, bei dem die folgenden Schritte durchgeführt werden:
- Bereitstellen von zwei Decklagen,
- Bereitstellen von zumindest zwei Lagen mit quer zur Plattenebene verlaufenden Stegen,
- Bereitstellen von zumindest einer Stützlage, die in Richtung der Plattenebene eine größere Formstabilität aufweist als jede der zumindest zwei Lagen mit den quer zur Plattenebene verlaufenden Stegen, und
- Erzeugen eines Schichtaufbaus unter Verwendung der Decklagen, der zumindest zwei Lagen mit den quer zur Plattenebene verlaufenden Stegen und der zumindest einen Stützlage, wobei die beiden Decklagen so angeordnet werden, dass sie auch die Außenseiten der fertigen Leichtbauplatte bilden, wobei die zumindest eine Stützlage zwischen zumindest zwei der Lagen mit den quer zur Plattenebene verlaufenden Stegen angeordnet wird und wobei an einer Schmalfläche der Leichtbauplatte ein Ende zumindest einer Stützlage gegenüber einem Ende zumindest einer Decklage horizontal versetzt angeordnet wird.

Durch das erfindungsgemäße Verfahren kann bei einer Leichtbauplatte mit einfachen Mitteln, insbesondere ohne Vorsehen von Ausfräsungen und ohne Einsetzen von Rahmenprofilen, eine Abdeckung im Bereich der Schmalfläche angebracht werden, die sich vorzugsweise über die gesamte Schmalfläche erstreckt und mit der individuelle Kantenkonturen der Schmalfläche der Leichtbauplatte sicher abgedeckt werden können.

Gemäß einer Ausgestaltung des erfindungsgemäßen Verfahrens wird der Schichtaufbau durch Verklebung der verschiedenen Lagen miteinander erzeugt. Das Verkleben ermöglicht einerseits eine einfache und schnelle Herstellung des Schichtaufbaus und damit der Leichtbauplatte, andererseits wird nach dem Abbinden bzw. Aushärten des Klebstoffs eine hohe Stabilität erreicht, die auch bei einer Belastung des Kantenbereichs, beispielsweise bei einem einwirkenden Stoß, gewährleistet, dass die Stützlage ihre ursprüngliche Position beibehält und dadurch die Abdeckung optimal unterstützt und verstärkt.

Besonders einfach kann eine Leichtbauplatte dadurch hergestellt werden, dass in einem ersten Schritt mindestens zwei Schichtaufbauten aus jeweils einer Decklage, einer Lage mit den quer zur Plattenebene verlaufenden Stegen und/oder einer Stützlage erzeugt werden, und dass in einem weiteren Schritt aus den nach dem ersten Schritt erhaltenen Schichtaufbauten durch flächige Verklebung insbesondere ihrer Stützlagen miteinander ein Schichtaufbau erzeugt wird.

Gemäß noch einer weiteren Ausgestaltung des erfindungsgemäßen Verfahrens wird zumindest eine Schmalfläche des fertigen Schichtaufbaus besäumt und auf die besäumte Schmalfläche eine Abdeckung aufgebracht, wobei die Abdeckung und die Kantenkontur der Schmalfläche so aufeinander abgestimmt sind, dass die Abdeckung durch die Stützlage in Richtung der Plattenebene abgestützt wird. Dabei kann die Schmalfläche im Zuge des Besäumens und/oder in einem nachfolgenden Schritt mit der gewünschten Kantenkontur versehen werden. Das Vorhandensein einer oder mehrerer Stützlagen erlaubt individuelle Kantenkonturen der Schmalfläche, die über die Dicke der Leichtbauplatte nahezu beliebig geformt sein können. Insbesondere sind dadurch mit einfachen Mitteln und unter Gewährleistung einer optimalen Abstützung der Abdeckung ebenflächige, konvexe und/oder konkave Kantenkonturen realisierbar. Rahmenprofile, deren Anbringung einen relativ hohen Aufwand verursacht, sind damit nicht mehr erforderlich.

Die Leichtbauplatte wird gemäß wiederum einer weiteren Ausgestaltung des erfindungsgemäßen Verfahrens mit einer Beschichtung aus einem Kunststoff, insbesondere enthaltend PVC, ABS, PET, Polyolefine, vorzugsweise PP, härtbare Harze, vorzugsweise Melaminharz, und/oder Acryl, vorzugsweise PMMA versehen. Es ist auch denkbar, eine Lage aus einem Furnier oder einem Schichtstoff oder einem dünnen Holzwerkstoff, insbesondere einer Dünnspanplatte oder einer dünnen Faserplatte, vorzugsweise Hartfaserplatte, vorzusehen. Dabei wird die Beschichtung erfindungsgemäß um eine zuvor hergestellte Kantenkontur der Schmalfläche gebogen und fixiert. Es ist aber auch denkbar, die Schmalfläche allein mit einer Abdeckung, die ebenfalls aus den vorgenannten Materialien bestehen kann, zu versehen. Dabei kann die Abdeckung und/oder die Beschichtung in Form eines quasi endlosen Materials, beispielsweise auf einer Rolle, bereitgestellt werden.

Es gibt nun eine Vielzahl von Möglichkeiten, die erfindungsgemäße Leichtbauplatte und das erfindungsgemäße Verfahren auszugestalten und weiterzubilden. Hierzu wird einerseits verwiesen auf die dem Patentanspruch 1 nachgeordneten Patentansprüche, andererseits auf die Beschreibung verschiedener Ausführungsbeispiele in Verbindung mit der Zeichnung. In der Zeichnung zeigt:
- Fig. 1: eine perspektivische Teilansicht eines ersten Beispiels einer Leichtbauplatte (nicht Gegenstand der vorliegenden Erfindung),
- Fig. 2: eine Schnittansicht eines ersten Ausführungsbeispiels der Leichtbauplatte gemäß der vorliegenden Erfindung,
- Fig. 3: eine Schnittansicht eines weiteren Beispiels einer Leichtbauplatte (nicht Gegenstand der vorliegenden Erfindung),
- Fig. 4: eine Schnittansicht eines zweiten Ausführungsbeispiels der Leichtbauplatte gemäß der vorliegenden Erfindung,
- Fig. 5: eine perspektivische Ansicht eines dritten Ausführungsbeispiels einer Leichtbauplatte mit Freiform gemäß der vorliegenden Erfindung,
- Fig. 6: eine Schnittansicht eines weiteren Beispiels einer Leichtbauplatte (nicht Gegenstand der vorliegenden Erfindung),
- Fig. 7: eine Schnittansicht eines weiteren Beispiels einer Leichtbauplatte (nicht Gegenstand der vorliegenden Erfindung),
- Fig. 8: eine Schnittansicht eines weiteren Beispiels einer Leichtbauplatte (nicht Gegenstand der vorliegenden Erfindung),
- Fig. 9: eine Schnittansicht eines weiteren Beispiels einer Leichtbauplatte (nicht Gegenstand der vorliegenden Erfindung),
- Fig. 10: eine Schnittansicht eines weiteren Beispiels einer Leichtbauplatte (nicht Gegenstand der vorliegenden Erfindung),
- Fig. 11: eine Schnittansicht eines weiteren Beispiels einer Leichtbauplatte (nicht Gegenstand der vorliegenden Erfindung),
- Fig. 12: eine schematische Darstellung eines ersten Ausführungsbeispiels eines Verfahrens gemäß der vorliegenden Erfindung,
- Fig. 13: eine schematische Darstellung eines zweiten Ausführungsbeispiels eines Verfahrens gemäß der vorliegenden Erfindung,
- Fig. 14: eine schematische Darstellung eines dritten Ausführungsbeispiels eines Verfahrens gemäß der vorliegenden Erfindung, und
- Fig. 15: eine schematische Darstellung eines vierten Ausführungsbeispiels eines Verfahrens gemäß der vorliegenden Erfindung.

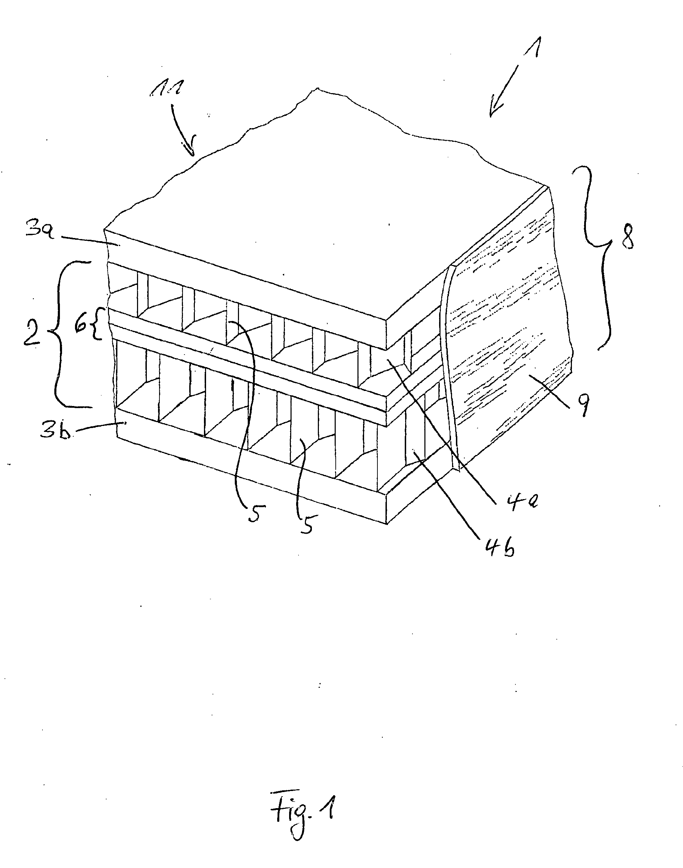

Die Beispiele von Leichtbauplatten 1 in den Figuren 1, 3 und 6 bis 11 sind nicht Gegenstand der vorliegenden Erfindung, sondern dienen lediglich dem besseren Verständnis des grundsätzlichen Aufbaus einer Leichtbauplatte mit mindestens einer Stützlage, die auch Gegenstand der vorliegenden Erfindung ist.

Fig. 1 zeigt eine Leichtbauplatte 1 (nicht Gegenstand der vorliegenden Erfindung) für den Möbelbau mit einer Mittellage 2 und zwei Decklagen 3a und 3b, die die Mittellage 2 einschließen. Die Mittellage 2 weist zwei Lagen 4a und 4b mit jeweils quer zur Plattenebene verlaufenden Stegen 5 auf. Zwischen den beiden Lagen 4a und 4b ist eine zweigeteilte Stützlage 6 angeordnet, die in Richtung der Plattenebene, also in einer Richtung parallel zu den Decklagen, eine größere Formstabilität als die Lagen 4a und 4b aufweist.

Die Schmalfläche 8 des die Leichtbauplatte 1 bildenden Schichtaufbaus ist mit einer Abdeckung 9 aus einem PMMA-Kunststoff in Form eines Holzdekors abgedeckt. Die Abdeckung 9 verläuft dabei über die gesamte Schmalfläche 8, deckt also die Stirnkanten der beiden Decklagen 3a und 3b und die vollständige Mittellage 2 mit darin angeordneter Stützlage 6 ab.

Alle Lagen im Schichtaufbau 11 sind dabei mittels Verklebung miteinander verbunden. Auch die einzelnen Lagen der zweigeteilten Stützlage 6 sind flächig mittels Verklebung miteinander verbunden. Entsprechendes gilt auch für die Abdeckung 9, die ebenfalls mittels Verkleben fixiert ist.

Die beiden die Stege 5 aufweisenden Lagen 4a und 4b, die im vorliegenden Beispiel eine unterschiedliche Dicke haben, weisen jeweils eine Lage aus einer Pappwabenstruktur auf. Die beiden Decklagen 3a und 3b sowie die Stützlage 6 bestehen aus einem Holzwerkstoff, der im vorliegenden Fall nicht weiter beschichtet ist.

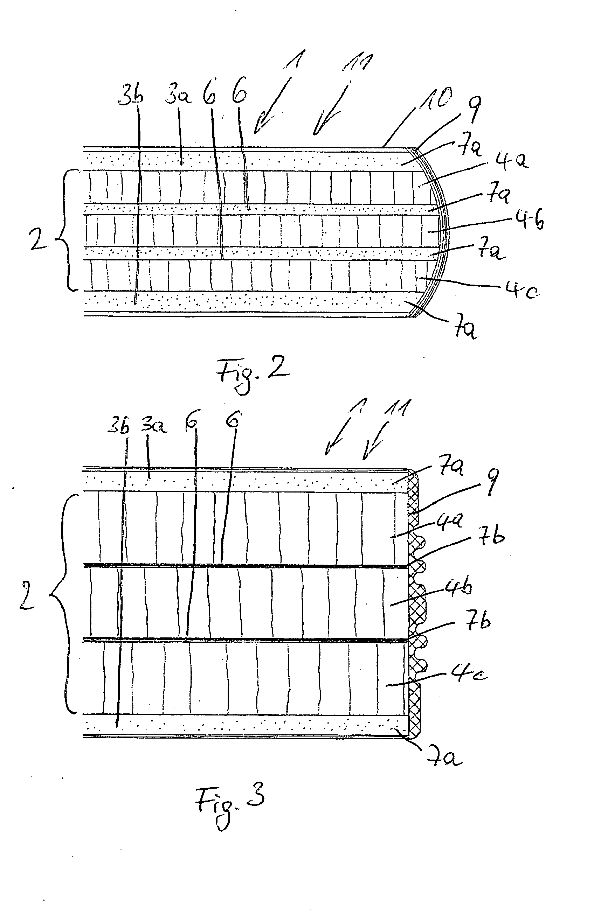

In Fig. 2 ist ein Schichtaufbau 11 einer erfindungsgemäßen Leichtbauplatte 1 dargestellt, bei dem die Mittellage 2 drei Lagen 4a, 4b und 4c mit quer zur Plattenebene verlaufenden Stegen 5 aufweist. In diesem Fall sind zwei Stützlagen 6 jeweils zwischen zwei benachbarten Lagen 4a und 4b bzw. 4b und 4c der Mittellage 2 angeordnet. Die Decklagen 3a und 3b sowie die beiden Stützlagen 6 sind dabei aus einer Spanplatte 7a hergestellt. Die Decklagen 3a und 3b sind jeweils mit einer Beschichtung 10 versehen. Die Schmalfläche 8 weist eine konvexe Kantenkontur auf, die von einer Abdeckung 9 in Form eines Schichtstoffes abgedeckt ist. Die Abdeckung 9 verläuft über die gesamte Schmalfläche 8, erstreckt sich also über die Mittellage 2, die Decklagen 3a und 3b sowie die Beschichtung 10.

Fig. 3 zeigt ein weiteres Beispiel einer Leichtbauplatte 1 (nicht Gegenstand der vorliegenden Erfindung). Bei dem hier dargestellten Schichtaufbau 11 sind die Decklagen 3a und 3b ebenfalls aus einer Spanplatte 7a hergestellt. Die beiden Stützlagen 6 bestehen im vorliegenden Fall aus einer Faserplatte 7b, genauer aus einer Hartfaserplatte. Die Schmalfläche 8 ist in diesem Fall lediglich besäumt und weist daher eine ebenflächige Kantenkontur auf. Auch hier ist die gesamte Schmalfläche 8 mit einer Abdeckung 9 abgedeckt, die hier aus einem Kunststoff auf Acrylbasis, nämlich PMMA, besteht. Die Abdeckung 9 ist außenseitig profiliert.

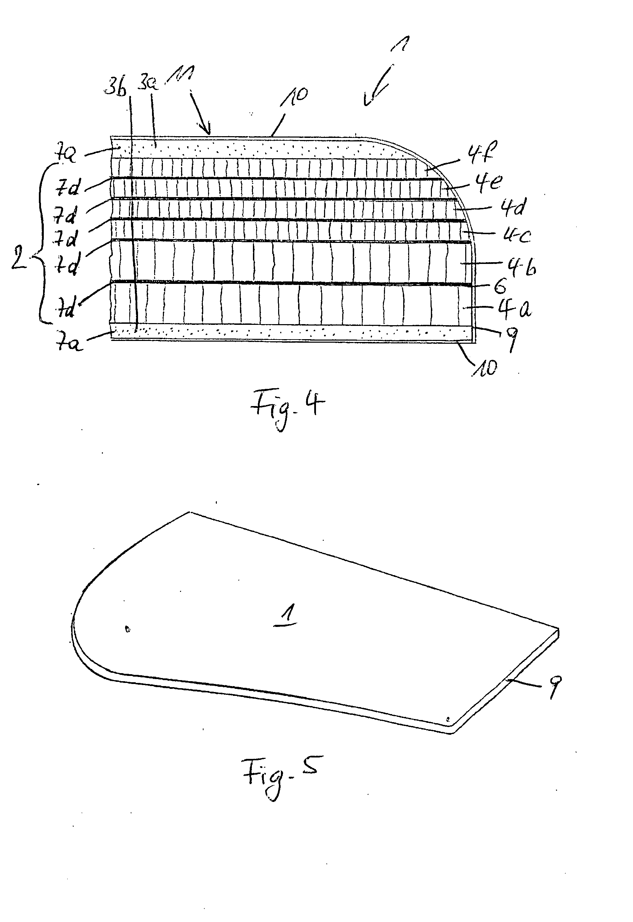

Bei dem erfindungsgemäßen Ausführungsbeispiel in Fig. 4 ist die Mittellage 2 6-lagig aufgebaut, wobei die untere Hälfte der Mittellage 2 zwei relativ dicke Lagen 4a und 4b und die obere Hälfte vier relativ dünne Lagen 4c, 4d, 4e und 4f einer Pappwabenstruktur aufweist. Zwischen den einzelnen Lagen der Mittellage 2 ist jeweils eine Stützlage 6 angeordnet. Die Decklagen 3a und 3b umschließen die Mittellage 2 mit den integrierten Stützlagen 6 und vervollständigen den Schichtaufbau 11. Auch hier verläuft eine Abdeckung 9 über die gesamte Schmalfläche 8 der Leichtbauplatte 1, wobei die Abdeckung 9 in die Beschichtung 10 der oberen Decklage 3a übergeht. Das Kantenprofil weist dabei einen abgerundeten oberen Teil und einen ebenen unteren Teil auf. Zur Gewährleistung einer ausreichenden Formstabilität sind dabei im abgerundeten oberen Bereich mehr Stützlagen als im ebenen unteren Bereich vorgesehen. Hier sind die Decklagen aus einer Spanplatte 7a und die Stützlage aus einem Laminat 7d hergestellt.

Fig. 5 zeigt eine erfindungsgemäße Leichtbauplatte 1 in Freiform, bei der die Plattenkontur zwei gekrümmte Abschnitte aufweist, die mit einer Abdeckung 9 im Bereich der Schmalfläche 8 versehen sind. Dabei ist der kleinste Krümmungsradius der in Fig. 5 links dargestellten Krümmung relativ groß, beträgt hier nämlich 100 mm, wohingegen der Krümmungsradius bei der rechts dargestellten Krümmung lediglich 10 mm beträgt. Aufgrund der erfindungsgemäß vorgesehen Stützlage, die in Fig. 5 nicht sichtbar ist, da sie von der Abdeckung 9 überdeckt ist, kann die Abdeckung 9 entlang der gesamten Plattenkontur vorgesehen werden, unabhängig von den Krümmungsradien.

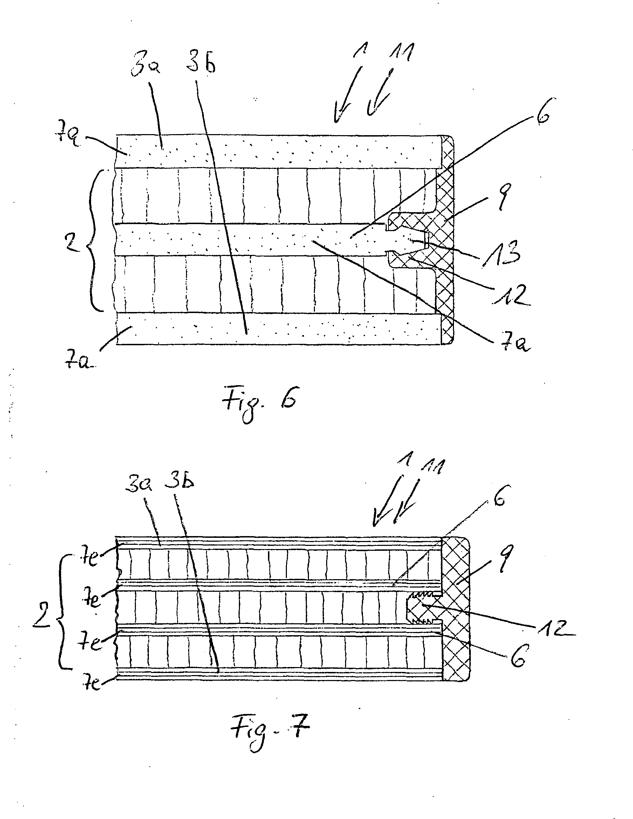

Bei den Beispielen in den Figuren 6 und 7 ist jeweils ein Schichtaufbau 11 einer Leichtbauplatte 1 (nicht Gegenstand der vorliegenden Erfindung) dargestellt, bei dem die Abdeckung 9 mittels eines zur Platteninnenseite hervorstehenden Rastmechanismus 12 an einer oder mehreren Stützlagen befestigt ist. Gemäß Fig. 6 ist nur eine einzelne Stützlage 6 innerhalb der Mittellage 2 vorgesehen, die an ihrem zur Schmalfläche 8 hin weisenden Ende mit einem Profil 13 versehen ist, das rastend mit dem Rastmechanismus 12 der Abdeckung 9 zusammenwirkt. Bei dem in Fig. 6 dargestellten Fall umfasst der Rastmechanismus 12 mit zwei Greifarmen das Profil 13 der Stützlage 6. Bei Fig. 7 besteht der Rastmechanismus 12 aus einem mit umlaufenden Rippen versehenen Vorsprung, der zwischen zwei Stützlagen 6 verrastet bzw, verklemmt wird. Im Fall der Figur 6 sind als Decklagen 3a, 3b sowie als Stützlage 6 Spanplatten vorgesehen. Im Fall der Figur 7 sind als Decklagen 3a, 3b sowie als Stützlagen 6 Sperrholzplatten 7e vorgesehen. Vorteil der jeweiligen Befestigungsmethode in den Figuren 6 und 7 ist, dass die Abdeckung 9 keine Kräfte in den Verbund zwischen Mittellage 2 und Deckplatte 3a bzw. 3b einbringt, weil die Befestigung an der Stützlage bzw. den beiden Stützlagen vorgenommen wird.

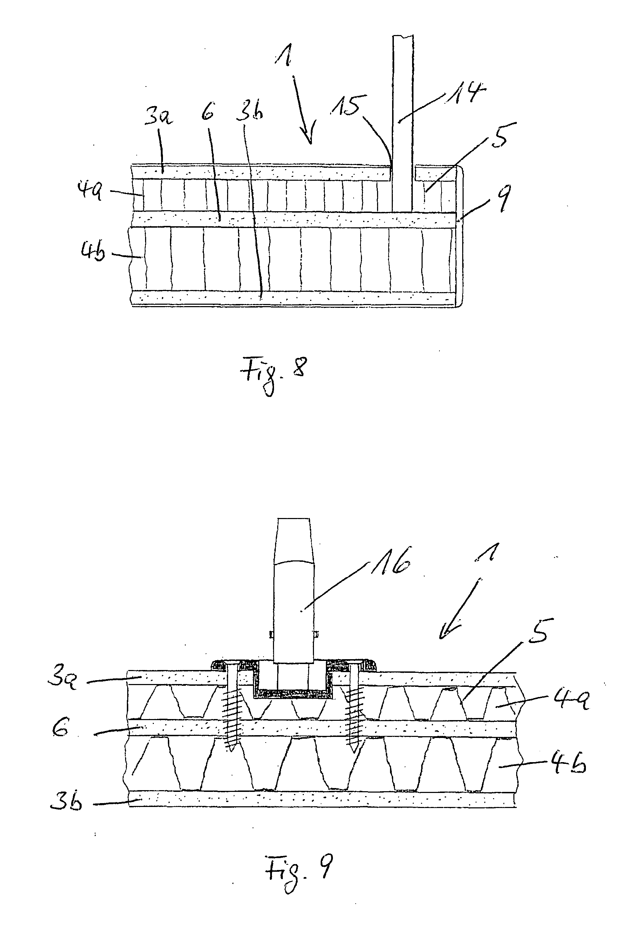

In Fig. 8 ist ein Beispiel (nicht Gegenstand der vorliegenden Erfindung) gezeigt, bei dem eine Schrankrückwand 14 in einen Nut 15 in der oberen Decklage 3a und der angrenzenden Wabenstrukturlage 4a angeordnet ist. Ein Vorteil der Stützlage 6 ist darin zu sehen, dass die Schrankrückwand 14 wie bei Korpussen aus massiven Materialien einfach eingenutet werden kann. Besondere Befestigungseinrichtungen sind nicht erforderlich, da die Rückwand 14 durch die Stützlage 6 abgestützt wird und außerdem der verbleibende Plattenstreifen zur Leichtbauplattenkante hin durch die Stege 5 gemeinsam mit der Abdeckung 9 ausreichend fixiert ist. Fig. 9 zeigt eine Leichtbauplatte 1 (nicht Gegenstand der vorliegenden Erfindung) mit einem Beschlagteil 16 in Form eines Topfscharniers. Die Blickrichtung entspricht der Richtung von Plattenmitte zum Rand. Hier ist das Beschlagteil in die obere Decklage 3a eingesetzt und mit der Stützlage 6 verschraubt. Die Stützlage 6 kann damit auch zur einfacheren Befestigung von Beschlagteilen, auch bei größeren Plattendicken, dienen. Bisher bestand im Stand der Technik außerdem stets die Anforderung, die Beschlagteile auch mit der gegenüberliegenden, d.h, unteren Decklage 3b, zu verbinden, was bei Leichtbauplatten mit größeren Plattendicken aufwändig war und auch der Vorhaltung unterschiedlicher Beschläge für unterschiedliche Plattendicken bedurfte. Auch wird es bei Leichtbauplatten mit dünneren Decklagen 3a, 3b mit einer entsprechenden Stützlage 6 erst möglich, herkömmliche Schrauben in einer Leichtbauplatte zu befestigen. In diesem Fall ergibt sich auch noch folgender Vorteil: Riegellose Leichtbauplatten werden derzeit überwiegend mit 8 mm starken Decklagen gefertigt, nur um Topfscharniere darin befestigen zu können. Beim Einsatz einer Leichtbauplatte mit Stützlage kann bei gleichen mechanischen Eigenschaften auf ca. 2,6 mm Deck-und 2,6 mm Stützlage zurückgegriffen werden, was eine weitere Gewichtseinsparung bringt. Es ist hier auch gezeigt, dass die quer zur Plattenebene verlaufenden Stege 5 nicht unbedingt genau senkrecht zur Plattenebene stehen müssen.

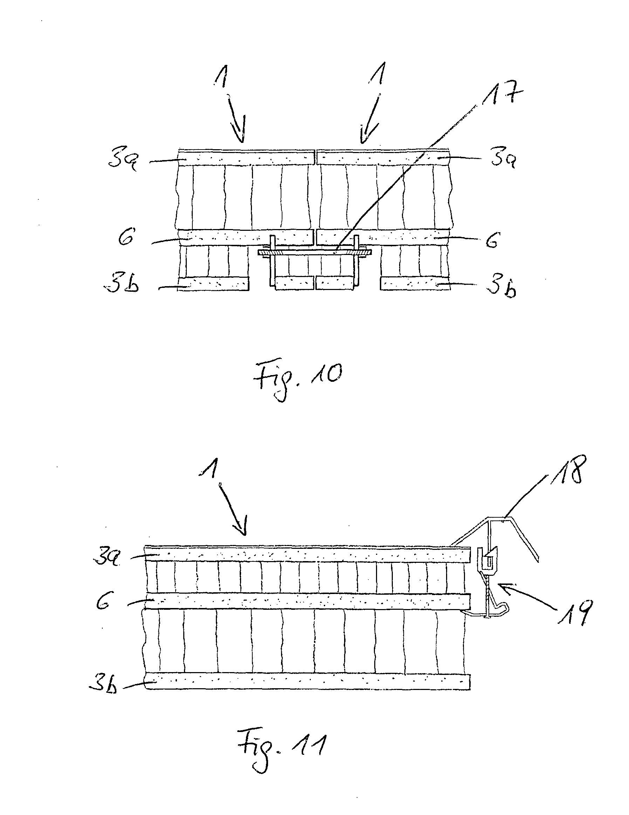

Fig. 10 (nicht Gegenstand der vorliegenden Erfindung) zeigt die Fixierung von Plattenstößen wie bspw. bei Küchenarbeitsplatten. Im dargestellten Fall sind zwei Leichtbauplatten 1 im Bereich ihrer Schmalflächen miteinander verbunden. Für diesen Einsatzzweck gibt es eine Vielzahl standardisierter sogenannter Arbeitsplattenverbinder 17. Diese sind jedoch auf herkömmliche, 38 mm dicke Spanplatten als Trägerplatte abgestimmt und können bei Arbeitsplatten aus Leichtbauplatten nicht eingesetzt werden. Die Stützlage 6 kann hier aber als das erforderliche Widerlager dienen, womit keine speziellen Verbinder 17 erforderlich sind. Damit kann auch wieder die Vorhaltung verschiedener Verbinder 17 für verschiedene Plattendicken entfallen.

Die Fixierung von Einbauten wie Spülen 18 bei Arbeitsplatten ist in Fig. 11 (nicht Gegenstand der vorliegenden Erfindung) gezeigt. Auch hier sind standardisierte Befestigungsklemmen 19, die in der Regel auf Plattenstärken bis 40 mm abgestimmt sind, verbreitet. Auf spezielle Adapter kann bei der Leichtbauplatte 1 verzichtet werden.

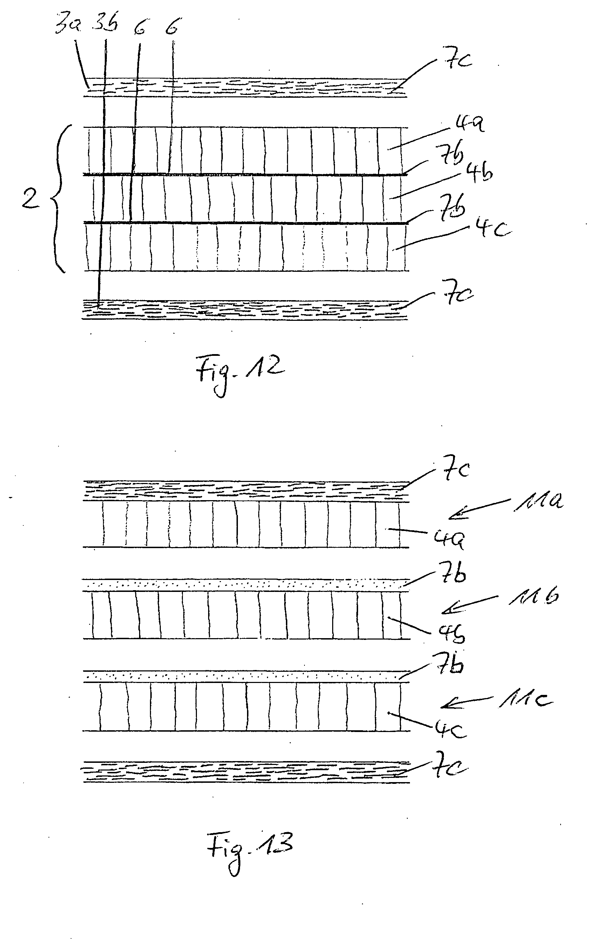

In Fig. 12 ist schematisch ein erfindungsgemäßes Ausführungsbeispiel eines Herstellungsverfahrens für eine Leichtbauplatte dargestellt. Gemäß diesem Ausführungsbeispiel wird zunächst eine Mittellage 2 dadurch hergestellt, dass mehrere Lagen 4a, 4b und 4c einer Pappwabenstruktur mit jeweils zwischen benachbarten Lagen angeordneten Stützlagen 6 verklebt werden. Anschließend wird die mit den Stützlagen 6 versehene Mittellage 2 mit zwei Decklagen 3a und 3b, die von einer OSB-Platte 7c gebildet werden, zusammengeführt und ebenfalls durch Verkleben fixiert.

Bei dem erfindungsgemäßen Herstellungsverfahren in Fig. 13 wird eine Wabenstrukturlage zunächst nur jeweils mit einer benachbarten Holzwerkstofflage verbunden. So wird die Lage 4a mit einer die spätere Decklage 3a bildenden OSB-Platte 7c verklebt, wodurch ein erster Schichtaufbau 11a entsteht. Ein weiterer Schichtaufbau 11b wird gebildet durch Verkleben der Lage 4b mit einer dünnen Faserplatte 7b, hier einer Dünn-MDF, auf dieselbe Weise wird auch der Schichtaufbau 11c aus der Lage 4c und der dünnen Faserplatte 7b erzeugt. Schließlich werden die einzelnen Schichtaufbauten 11a, 11b und 11c sowie eine die spätere untere Decklage 3b bildende Stützlage 6 zusammengeführt.

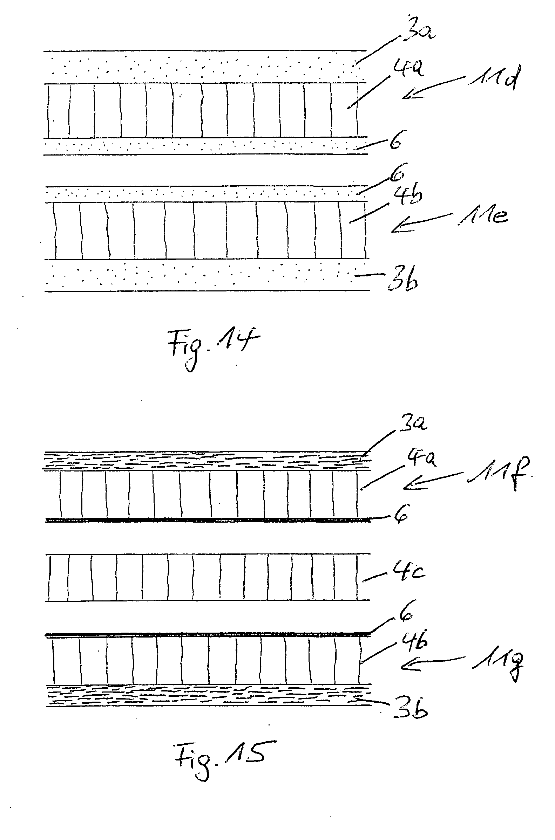

Bei dem in den Figuren 14 und 15 dargestellten erfindungsgemäßen Verfahren werden in einem ersten Verfahrensschritt zwei Schichtaufbauten 11d und 11e bzw. 11f und 11g aus jeweils einer Decklage 3a bzw. 3b, einer Wabenstrukturlage 4a bzw. 4b und einer Stützlage 6 erzeugt. In einem weiteren Schritt wird aus den nach dem ersten Schritt erhaltenen Schichtaufbauten 11d und 11e bzw. 11f und 11g durch flächige Verklebung der endgültige Schichtaufbau 11 erzeugt. Dabei werden gemäß Fig. 14 die beiden Stützlagen 6 unmittelbar miteinander verklebt, wohingegen bei Fig. 15 zwischen den beiden Stützlagen 6 noch eine weitere Wabenstrukturlage 4c angeordnet wird.

## Patentansprüche

1. Leichtbauplatte (1) für den Möbelbau mit einer Mittellage (2) und zwei Decklagen (3a,3b),
- wobei die Mittellage (2) zumindest zwei Lagen (4a-4f) mit quer zur Plattenebene verlaufenden Stegen (5) aufweist,
- wobei zwischen den zumindest zwei Lagen (4a-4f) mit den quer zur Plattenebene verlaufenden Stegen (5) zumindest eine Stützlage (6) angeordnet ist, und
- wobei die zumindest eine Stützlage (6) in Richtung der Plattenebene eine größere Formstabilität aufweist als jede der zumindest zwei Lagen (4a-4f) mit den quer zur Plattenebene verlaufenden Stegen (5),
**dadurch gekennzeichnet, dass** an einer Schmalfläche (8) der Leichtbauplatte (1) eine Stirnseite zumindest einer Stützlage (6) gegenüber einer Stirnseite zumindest einer Decklage (3a,3b) in Richtung der Plattenebene nach außen hin versetzt ist, so dass die Schmalfläche (8) eine konvexe Kantenkontur aufweist.

2. Leichtbauplatte (1) nach Anspruch 1, **dadurch gekennzeichnet, dass** zumindest eine der Lagen (4a-4f) mit den quer zur Plattenebene verlaufenden Stegen (5) eine Lage aus einer Zellulosematerial enthaltenden Wabenstruktur, insbesondere einer Papier- oder Pappwabenstruktur, aufweist.

3. Leichtbauplatte (1) nach Anspruch 1 oder 2, **dadurch gekennzeichnet, dass** die zumindest eine Stützlage (6) zumindest eine Lage ohne Durchbrechungen aufweist.

4. Leichtbauplatte (1) nach einem der Ansprüche 1 bis 3, **dadurch gekennzeichnet, dass** die zumindest eine Stützlage (6) zumindest eine Lage aus einem Holzwerkstoff, insbesondere aus einer Spanplatte (7a), aus einer Faserplatte (7b), vorzugsweise Hartfaserplatte, aus einer OSB-Platte (7c), aus einem Laminat (7d) oder aus einer Sperrholzplatte (7e), aufweist.

5. Leichtbauplatte (1) nach einem der Ansprüche 1 bis 4, **dadurch gekennzeichnet, dass** die zumindest eine Stützlage (6) zumindest zwei Lagen aus einem Holzwerkstoff aufweist, von denen zumindest eine insbesondere aus einer Spanplatte (7a), aus einer Faserplatte (7b), vorzugsweise Hartfaserplatte, aus einer OSB-Platte (7c), aus einem Laminat (7d) oder aus einer Sperrholzplatte (7e) gebildet ist, wobei die Lagen vorzugsweise durch Verklebung miteinander verbunden sind.

6. Leichtbauplatte (1) nach einem der Ansprüche 1 bis 5, **dadurch gekennzeichnet, dass** zumindest eine der Decklagen (3a,3b) zumindest eine Lage aus einem Holzwerkstoff, insbesondere aus einer Spanplatte (7a), aus einer Faserplatte (7b), vorzugsweise Hartfaserplatte, aus einer OSB-Platte (7c), aus einem Laminat (7d) oder aus einer Sperrholzplatte (7e), aufweist.

7. Leichtbauplatte (1) nach einem der Ansprüche 1 bis 6, **dadurch gekennzeichnet, dass** die gesamte Dicke der Leichtbauplatte (1) mindestens 40 mm, insbesondere mindestens 60 mm, vorzugsweise mindestens 100 mm, beträgt.

8. Leichtbauplatte (1) nach einem der Ansprüche 1 bis 7,
**dadurch gekennzeichnet, dass** zumindest eine Schmalfläche (8) der Leichtbauplatte (1) mit einer Abdeckung (9) versehen ist, die sich vorzugsweise über die gesamte Dicke der Leichtbauplatte (1) erstreckt.

9. Leichtbauplatte (1) nach einem der Ansprüche 1 bis 8,
**dadurch gekennzeichnet, dass** die Kontur der der Leichtbauplatte (1) abgewandten Fläche der Abdeckung (9) der Kantenkontur der Schmalfläche (8) der Leichtbauplatte (1) folgt.

10. Leichtbauplatte (1) nach einem der Ansprüche 1 bis 9, **dadurch gekennzeichnet, dass** die Plattenkontur der Leichtbauplatte (1) zumindest abschnittsweise einen Krümmungsradius von höchstens 30 mm, insbesondere höchstens 20 mm, vorzugsweise höchstens 10 mm, aufweist.

11. Verfahren zur Herstellung einer Leichtbauplatte (1) für den Möbelbau, bei dem die folgenden Schritte durchgeführt werden:
- Bereitstellen von zwei Decklagen (3a,3b),
- Bereitstellen von zumindest zwei Lagen (4a-4f) mit quer zur Plattenebene verlaufenden Stegen (5),
- Bereitstellen von zumindest einer Stützlage (6), die in Richtung der Plattenebene eine größere Formstabilität aufweist als jede der zumindest zwei Lagen (4a-4f) mit den quer zur Plattenebene verlaufenden Stegen (5), und
- Erzeugen eines Schichtaufbaus (11) unter Verwendung der Decklagen (3a, 3b), der zumindest zwei Lagen mit quer zur Plattenebene verlaufenden Stegen (5) und der zumindest einen Stützlage (6), wobei die beiden Decklagen (3a,3b) so angeordnet werden, dass sie auch die Außenseiten der fertigen Leichtbauplatte (1) bilden, wobei die zumindest eine Stützlage (6) zwischen zumindest zwei der Lagen (4a-4f) mit den quer zur Plattenebene verlaufenden Stegen (5) angeordnet wird und wobei an einer Schmalfläche (8) der Leichtbauplatte (1) ein Ende zumindest einer Stützlage (6) gegenüber einem Ende zumindest einer Decklage (3a, 3b) horizontal versetzt angeordnet wird.

12. Verfahren nach Anspruch 11, **dadurch gekennzeichnet, dass** der Schichtaufbau (11) durch Verklebung der verschiedenen Lagen (3a,3b,4a-4f,6) erzeugt wird.

13. Verfahren nach Anspruch 11 oder 12, **dadurch gekennzeichnet, dass** in einem ersten Schritt mindestens zwei Schichtaufbauten (11d, 11e; 11f, 11g) aus jeweils einer Decklage (3a,3b), einer Lage (4a-4f) mit den quer zur Plattenebene verlaufenden Stegen (5) und einer Stützlage (6) erzeugt werden, und dass in einem weiteren Schritt aus den nach dem ersten Schritt erhaltenen Schichtaufbauten durch flächige Verklebung ihrer Stützlagen (6) miteinander ein Schichtaufbau (11) erzeugt wird.

14. Verfahren nach einem der Ansprüche 11 bis 13, **dadurch gekennzeichnet, dass** zumindest eine Schmalfläche (8) des fertigen Schichtaufbaus (11) besäumt wird und dass auf die besäumte Schmalfläche (8) eine Abdeckung (9) aufgebracht wird, wobei die Abdeckung (9) und die Kantenkontur der Schmalfläche (8) so aufeinander abgestimmt sind, dass die Abdeckung (9) durch die Stützlage (6) in Richtung der Plattenebene abgestützt wird.

15. Verfahren nach Anspruch 14, **dadurch gekennzeichnet, dass** die Schmalfläche (8) im Zuge des Besäumens und/oder in einem nachfolgenden Schritt mit der Kantenkontur versehen wird.

## Claims

1. Light construction board (1) for furniture construction, having a central layer (2) and two top layers (3a, 3b),
- the central layer (2) comprising at least two layers (4a-4f) having webs (5) extending transverse to the plane of the board,
- at least one support layer (6) being arranged between the at least two layers (4a-4f) having the webs (5) extending transverse to the plane of the board, and
- the at least one support layer (6) having a greater dimensional stability in the direction of the plane of the board than each of the at least two layers (4a-4f) having the webs (5) extending transverse to the plane of the board,
**characterised in that**, on a narrow face (8) of the light construction board (1), an end face of at least one support layer (6) is offset outwards, in the direction of the plane of the board, relative to an end face of at least one top layer (3a, 3b), in such a way that the narrow face (8) has a convex edge contour.

2. Light construction board (1) according to claim 1, **characterised in that** at least one of the layers (4a-4f) having the webs (5) extending transverse to the plane of the board comprises a layer of a honeycomb structure comprising a cellulosic material, in particular a paper or cardboard honeycomb structure.

3. Light construction board (1) according to claim 1 or 2, **characterised in that** the at least one support layer (6) comprises at least one layer without openings.

4. Light construction board (1) according to any one of claims 1 to 3, **characterised in that** the at least one support layer (6) comprises at least one layer of a wooden material, in particular of a particle board (7a), of a fibreboard (7b), preferably a hard density fibreboard, of an OSB board (7c), of a laminate (7d) or of a plywood board (7e).

5. Light construction board (1) according to any one of claims 1 to 4, **characterised in that** the at least one support layer (6) comprises at least two layers of a wooden material, of which at least one is in particular formed from a particle board (7a), from a fibreboard (7b), preferably a hard density fibreboard, from an OSB board (7c), from a laminate (7d) or from a plywood board (7e), the layers preferably being joined together by gluing.

6. Light construction board (1) according to any one of claims 1 to 5, **characterised in that** at least one of the top layers (3a, 3b) comprises at least one layer of a wooden material, in particular of a particle board (7a), of a fibreboard (7b), preferably a hard density fibreboard, of an OSB board (7c), of a laminate (7d) or of a plywood board (7e).

7. Light construction board (1) according to any one of claims 1 to 6, **characterised in that** the total thickness of the light construction board (1) is at least 40 mm, in particular at least 60 mm, preferably at least 100 mm.

8. Light construction board (1) according to any one of claims 1 to 7, **characterised in that** at least one narrow face (8) of the light construction board (1) is provided with a cover (9), which preferably extends over the entire thickness of the light construction board (1).

9. Light construction board (1) according to any one of claims 1 to 8, **characterised in that** the contour of the face of the cover (9) facing away from the light construction board (1) follows the edge contour of the narrow face (8) of the light construction board (1).

10. Light construction board (1) according to any one of claims 1 to 9, **characterised in that** the board contour of the light construction board (1) has a radius of curvature of at most 30 mm, in particular at most 20 mm, preferably at most 10 mm, at least in portions.

11. Method for manufacturing a light construction board (1) for furniture construction, in which the following steps are carried out:
- providing two top layers (3a, 3b),
- providing at least two layers (4a-4f) having webs (5) extending transverse to the plane of the board,
- providing at least one support layer (6), which has a greater dimensional stability in the direction of the plane of the board than each of the at least two layers (4a-4f) having the webs (5) extending transverse to the plane of the board, and
- producing a layered construction (11) using the top layers (3a, 3b), the at least two layers having webs (5) extending transverse to the plane of the board, and the at least one support layer (6), the two top layers (3a, 3b) being arranged in such a way that they also form the outer faces of the complete light construction board (1), the at least one support layer (6) being arranged between at least two of the layers (4a-4f) having the webs (5) extending transverse to the plane of the board, and, on a narrow face (8) of the light construction board (1), an end of at least one support layer (6) being arranged offset horizontally from an end of at least one top layer (3a, 3b).

12. Method according to claim 11, **characterised in that** the layered construction (11) is produced by gluing together the various layers (3a, 3b, 4a-4f, 6).

13. Method according to claim 11 or 12, **characterised in that**, in a first step, at least two layered constructions (11d, 11e; 11f, 11g) are produced, each composed of a top layer (3a, 3b), a layer (4a-4f) having the webs (5) extending transverse to the plane of the board, and a support layer (6), and **in that**, in a further step, a layered construction (11) is produced from the layered constructions obtained in the first step, by gluing the support layers (6) thereof together in a planar manner.

14. Method according to any one of claims 11 to 13, **characterised in that** at least one narrow face (8) of the complete layered construction (11) is trimmed, and **in that** a cover (9) is applied to the trimmed narrow face (8), the cover (9) and the edge contour of the narrow face (8) being adapted to one another in such a way that the cover (9) is supported by the support layer (6) in the direction of the plane of the board.

15. Method according to claim 14, **characterised in that** the narrow face (8) is provided with the edge contour during the trimming process and/or in a subsequent step.

## Revendications

1. Panneau de construction légère (1) pour la construction de meuble avec une couche médiane (2) et deux couches de couverture (3a, 3b),
- la couche de couverture (2) comprenant au moins deux couches (4a-4f) avec des traverses (5) s'étendant transversalement au plan de panneau,
- entre les au moins deux couches (4a-4f) avec les traverses (5) s'étendant transversalement au plan de panneau une couche de support (6) étant disposée, et
- l'au moins une couche de support(6) présentant en direction du plan de panneau une stabilité de forme plus grande que celle d'au moins des deux couches (4a-4f) avec les traverses (5) s'étendant transversalement au plan de panneau,
**caractérisé en ce que** sur une surface étroite (8) de la panneau légère de construction (1), une face avant d'au moins une couche de support (6) est décalée par rapport à une face avant d'au moins une couche de couverture (3a, 3b) en direction du plan de panneau vers l'extérieur de sorte que la surface étroite (8) présente un contour de bord convexe.

2. Panneau légère de construction (1) selon la revendication 1, **caractérisé en ce qu'**au moins une des couches (4a-4f) avec les traverses (5) s'étendant transversalement au plan de panneau présente une couche composée d'une structure alvéolée contenant de la matière cellulose, en particulier une structure alvéolée en papier ou carton.

3. Panneau de construction légère (1) selon la revendication 1 ou 2, **caractérisé en ce que** l'au moins une couche de support (6) présente au moins une couche sans percées.

4. Panneau de construction légère (1) selon l'une des revendications 1 à 3, **caractérisé en ce que** l'au moins une couche de support (6) présente au moins une couche en matériau de bois, en particulier d'un panneau de particules (7a), d'un panneau de fibres (7b), de préférence un panneau de fibres dures, d'un panneau OSB (7c), d'un stratifié (7d) ou d'un panneau en contreplaqué (7e).

5. Panneau de construction légère (1) selon l'une des revendications 1 à 4, **caractérisé en ce que** l'au moins une couche de support (6) présente au moins deux couches en matériau de bois, dont au moins une est formée en particulier d'un panneau de particules (7a), d'un panneau de fibres (7b), de préférence un panneau de fibres dures, d'un panneau OSB (7c), d'un stratifié (7d) ou d'un panneau en contreplaqué (7e), les couches étant reliées ensemble de préférence par collage.

6. Panneau de construction légère (1) selon l'une des revendications 1 à 5, **caractérisé en ce qu'**au moins une des couches de couverture (3a, 3b) présente au moins une couche en matériau de bois, en particulier d'un panneau de particules (7a), d'un panneau de fibres (7b), de préférence un panneau de fibres dures, d'un panneau OSB (7c), d'un stratifié (7d) ou d'un panneau en contreplaqué (7e).

7. Panneau de construction légère selon l'une des revendications 1 à 6, **caractérisé en ce que** l'ensemble de l'épaisseur du panneau de construction légère (1) est d'au moins 40 mm, en particulier au moins 60 mm, de préférence au moins 100 mm.

8. Panneau de construction légère (1) selon l'une des revendications 1 à 7, **caractérisé en ce qu'**au moins une surface étroite (8) du panneau de construction légère (1) est munie d'une couverture (9) qui s'étend de préférence sur l'ensemble de l'épaisseur du panneau de construction légère (1).

9. Panneau de construction légère (1) selon l'une des revendications 1 à 8, **caractérisé en ce que** le contour de la surface détournée du panneau de construction légère (1), de la couverture (9) suit le contour de bordure de la surface étroite (8) du panneau de construction légère (1).

10. Panneau de construction légère (1) selon l'une des revendications 1 à 9, **caractérisé en ce que** le contour de panneau du panneau de construction légère (1) présente au moins par section un rayon de courbure d'au plus 30 mm, en particulier au plus 20 mm, de préférence au plus 10 mm.

11. Procédé pour la fabrication d'un panneau de construction légère (1) pour la construction de meuble, comportant les étapes suivantes :
- préparation de deux couches de couverture (3a, 3b),
- préparation d'au moins deux couches (4a-4f) avec des traverses (5) s'étendant transversalement au plan de panneau,
- préparation d'au moins une couche de support (6) qui présente dans la direction du plan de panneau une plus grande stabilité de forme que chacune au moins des deux couches (4a-4f) avec les traverses (5) s'étendant transversalement au plan de panneau, et
- génération d'une construction en sandwich (11) en utilisant les couches de couverture (3a, 3b), les au moins deux couches avec les traverses (5) s'étendant transversalement au plan de panneau et l'au moins une couche de support (6), les deux couches de couverture (3a, 3b) étant disposées de sorte qu'elles forment également les faces externes du panneau de construction légère (1) fini, l'au moins une couche de support (6) étant disposée entre au moins deux des couches (4a-4f) avec les traverses (5) s'étendant transversalement au plan de panneau, et sur une surface étroite (8) du panneau de construction légère (1), une extrémité d'au moins une couche de support (6) étant disposée en face d'une extrémité d'au moins une couche de couverture (3a, 3b) décalée horizontalement.

12. Procédé selon la revendication 11, **caractérisé en ce que** la construction en sandwich (11) est réalisée par collage des différentes couches (3a, 3b, 4a-4f, 6).

13. Procédé selon la revendication 11 ou 12, **caractérisé en ce que** dans une première étape au moins deux constructions en sandwich (11d, 11e; 11f, 11g) sont formées à partir respectivement d'une couche de couverture (3a,3b), d'une couche (4a-4f) avec les traverses (5) s'étendant transversalement au plan de panneau et une couche de support (6), et **en ce que** dans une autre étape, il est généré à partir des constructions en sandwich obtenues dans la première étape une construction en sandwich (11) par collage de surface de leur couches de support (6) entre elles.

14. Procédé selon l'une des revendications 11 à 13, **caractérisé en ce que** qu'au moins une surface étroite (8) de la construction en sandwich (11) finie est rognée et **en ce que** sur la surface étroite (8) rognée, il est appliqué une couverture (9), la couverture (9) et le contour de bordure de la surface étroite (8) coïncidant entre elles de sorte que la couverture (9) est soutenue par la couche de support (6) dans la direction du plan de panneau.

15. Procédé selon la revendication 14, **caractérisé en ce que** la surface étroite (8) est munie du contour de bord pendant le rognage et/ou dans une étape suivante.
